# EUROPEAN PATENT SPECIFICATION

(11) **EP 0 611 957 B1**
(45) Date of publication and mention of the grant of the patent: **03.06.1998**
(21) Application number: 94200329.4
(22) Date of filing: 14.02.1994
(51) Int. Cl.: G01G 19/08, G01G 19/12

(54) **Weighing device, particulary for mounting on a vehicle**
Wiegegerät, hauptsächlich zur Montage auf einem Fahrzeug
Dispositif de pesage, notamment pour montage sur un véhicule

(30) Priority: 15.02.1993 BE 9300141
(43) Date of publication of application: 24.08.1994
(73) Proprietor: NV NUYTS ORB, B-2360 Oud-Turnhout (BE)
(72) Inventor: Nuyts, Henry, B-2470 Retie (BE)
(74) Representative: Lips, Hendrik Jan George, Ir.

(56) References cited:
- EP-A- 0 476 778

## Description

The invention relates to a weighing device, particularly for mounting on a vehicle as this is described in the preamble of the main claim.

Such a device is known from EP-A-O 476 778. In case of this know device dirt and moisture from the loading surface of the weighing frame can end up in the spaces in which the suspension elements and the load cells are situated. Also mechanical damage of said parts can occur when objects end up in the spaces and on the suspension elements concerned. Especially when the loading surface of the weighing device and e.g. the loading flap in which it is mounted, are to be cleaned regularly, this can cause difficulties.

The object of the invention is to remove these difficulties and to that end the features are applied as indicated in the characterizing portion of claim 1.

So the housing in which a suspension element is present is fixedly connected to either the bearing frame or the weighing frame and is substantially completely closed with exception of the opening through wich a console extends which is connected to either the weighing frame or the bearing frame.

By applying the feature of claim 2 it is obtained that the upper surface of the weighing frame as a whole is available for the load to be weighed, there being no consoles or other parts extending above said surface.

By applying the feature of claim 3 it is obtained that the opening, which has to be present between the bearing and the weighing frame to allow movement of the weighing frame, is covered by the upper surface of the weighing frame.

By providing the outer edge of the weighing frame with a flexible sheet, such as from a plastic, or with a brush a sealing can be established of the opening between the bearing frame and the weighing frame.

Due to this water falling on the weighing frame can be discharged to beyond the weighing device. By a proper choice of the flexible material, this will not affect the result of the weighing, or only affect this within the acceptable tolerances.

By applying the feature according to claim 5 a simple sealing can be obtained between a console and the opening in which it must be slightly movable.

According to one embodiment, the bearing frame can enclose the weighing frame at least partially, with a supplementary opening for a connecting piece being present in the bearing frame, said connecting piece being mounted on the enclosed part of the weighing frame on the one hand and on the part of the weighing frame serving to carry the load on the other hand.

In a special embodiment, the bearing frame can be constituted by two substantially rectangular tubes spaced apart within which parts of the weighing frame are located, that are likewise substantially rectangular and are provided with a pin-shaped fastening member engaged by the lower end of the suspension element, the upper end of which engaging the pin-shaped console connected to the bearing frame and extending through the relevant part of the weighing frame with clearance, this part of the weighing frame being provided with a connecting piece extending through the wall of the tube of the weighing frame with clearance an being connected to the part of the weighing frame serving to carry the load to be weighed.

Here, the housing is an integral entirety of a part of the weighing device.

Such a possibility can also be obtained when, according to a further embodiment, the bearing frame is constituted by a profile at the same time being the housing for the suspension elements located therein, and with at least a part of the weighing frame extending around said profile, said part being in the shape of a tube wherein the consoles are mounted and extend through openings in the bearing frame with clearance.

The invention is further explained by way of embodiments shown in the drawing, in which:
Fig. 1 through 8 show diagrammatic views of various embodiments of a device according to the invention, with certain parts being omited for the sake of clarity;
Fig. 9 shows a plan view of an embodiment of a weighing device according to the invention, substantially corresponding to that of fig. 8 and being mounted on a vehicle;
Fig.10 shows a vertical cross-section across a suspension element according to the line X-X of Fig. 1;
Fig.11 shows a vertical cross-section according to the line XI-XI of Fig.10;
Fig.12 shows diagrammatically a vertical cross-section across a part of a further embodiment;
Fig.13 shows diagrammatically a plan view and partial cross-section of the device of Fig.12 on a reduced scale;
Fig.14 shows diagrammatically a side view of a suspension element as it is applied with the embodiment according to the Figs. 12 and 13;
Figs. 15, 16 and 17 show diagrammatically views of some further embodiments of a device according to the invention; and
Fig. 18 shows a view corresponding to Fig.17, but with the device in an oblique position.

In the Figures, the bearing frame is always indicated by 1, the weighing frame by 2, a load cell by 3, a console by 4, a fastening member by 5, a suspension element by 6, the ends of the suspension element 6 by 7 and 8, the cardan connection at the ends of 7 and 8 by 11, the total of the suspension by 9, the clearance being present between the bearing frame 1 and the weighing frame 2 by 12, the space in which the suspension 9 is located by 16, the housing by 17 and the opening in the housing the console 4 extends through by 18. The whole of the device is indicated by 23.

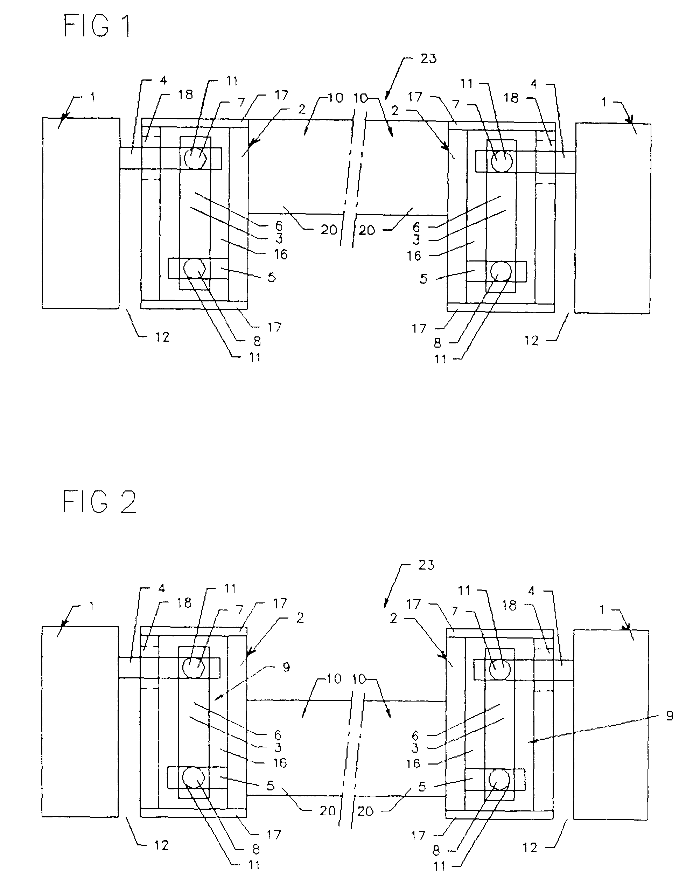

The Figs. 1, 2, 3 and 4 show embodiments in which the weighing frame 2 is assembled from the parts 17 and 20, in which said parts together can constitute a plane on which a load to be weighed can be positioned. The whole of bearing frame 1 and weighing frame 2 can possibly be a loading flap 10. Here, the parts of the bearing frame can be connected to for example a tube being rotatably mounted on a vehicle.

In the embodiment according to Fig. 1, the upper surface of the parts 20 of the weighing frame 2 is at equal height with the upper surface of the housings 17 and of the bearing frame 1. The bearing frame 1 can extend around the weighing frame 2, but can also consist of two parallel parts being connected by parts not further indicated of a vehicle to which the device 23 is connected. The bearing frame 1 is provided with the consoles 4 extending through openings 18 in a wall of the housing 17, in such a way that the weighing frame 2, being suspended to the consoles 4 by means of the suspension elements 6, can take up an oblique position in relation to the bearing frame 1.

In the embodiment according to Fig. 2, the upper surface of the part 20 of the weighing frame 2 is located beneath the upper surface of the housings 17 and of the bearing frame 1.

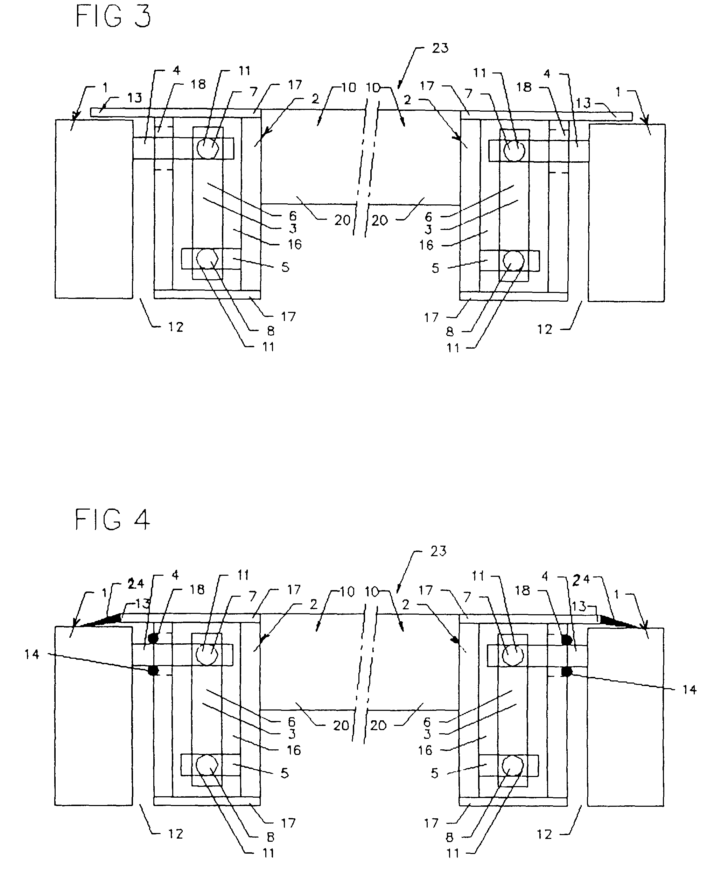

In the embodiment according to Fig. 3, the upper surface of the part 20 of the weighing frame 2 is in line with the upper surface of the housings 17, but at a certain height above the upper surface of the bearing frame 1, and along the edge, the weighing frame 2 is provided with a guard 13 extending across the clearance 12.

The embodiment according to Fig. 4 corresponds largely to that of Fig. 3, but here, the guard 13 is additionally provided with a sheet 24 for obtaining an even better sealing of the clearance 12. Further, the sealing 14 is mounted around the console 4, said sealing connecting to the edge of the opening 18 in the wall of the housing 17.

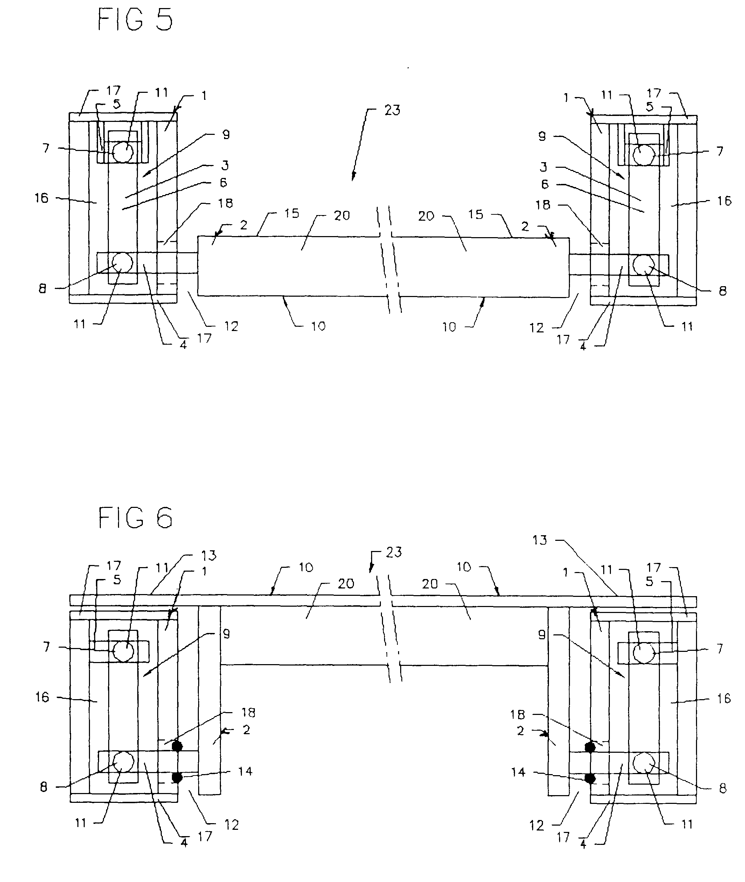

In the embodiment according to Fig. 5, the console 4 is connected to the weighing frame 2, and the fastening member 5 to the bearing frame 1. The opening 18 the console 4 extends through is now near the bottom side of the bearing frame 1. The upper surface of the weighing frame 2 is at a certain distance below the upper surface of the bearing frame 1.

In the embodiment according to Fig. 6, the upper surface of the weighing frame is at a certain height above the upper surface of the bearing frame 1 and again a guard 13 and a sealing 14 are provided.

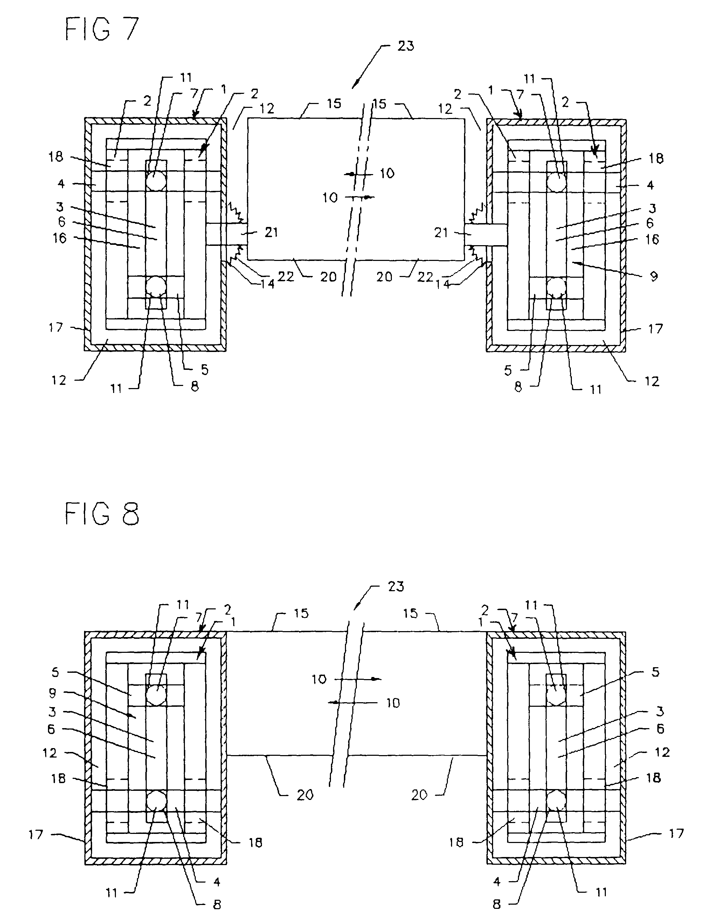

In the embodiment according to Fig. 7, the bearing frame 1 is constituted by rectangular tubes being at the same time the housings 17. The consoles 4 are fixedly mounted in the tubes and each console extends through two openings 18 in a part of the suspension 9, said part being substantially an entity with the weighing frame 2. The cardan connection 11 is mounted between two openings 18, as a result of which the end 7 of the suspension element 6 is supported. The other end 8 of the suspension element 6 also carries a cardan connection 11 connected to the fastening member 5 being part of the weighing frame 2. Further, a lateral connecting piece 21 is provided, extending through a secondary opening 22 in the bearing frame 1 and being connected to the further part 20 of the weighing frame 2. The opening 22 can be sealed by the flexible sealing 14. Further, the loading surface of the weighing frame 2 is indicated by 15.

In the embodiment according to Fig. 8, the weighing frame 2 is constituted by rectangular tubes being at the same time the housing 17. Within each tube, there is a part of the bearing frame 1 which will be connected to a part of the vehicle in a way not further indicated. For example, the bearing frame 1 can comprise two parallel legs across which the weighing frame 2 is slid. The tubes of the weighing frame can then be sealed at one end. The console 4 is fixedly connected to the weighing frame 2 and extends again through openings 18 in the suspension 9, with the end 8 of a suspension element 6 being present between said openings 18.

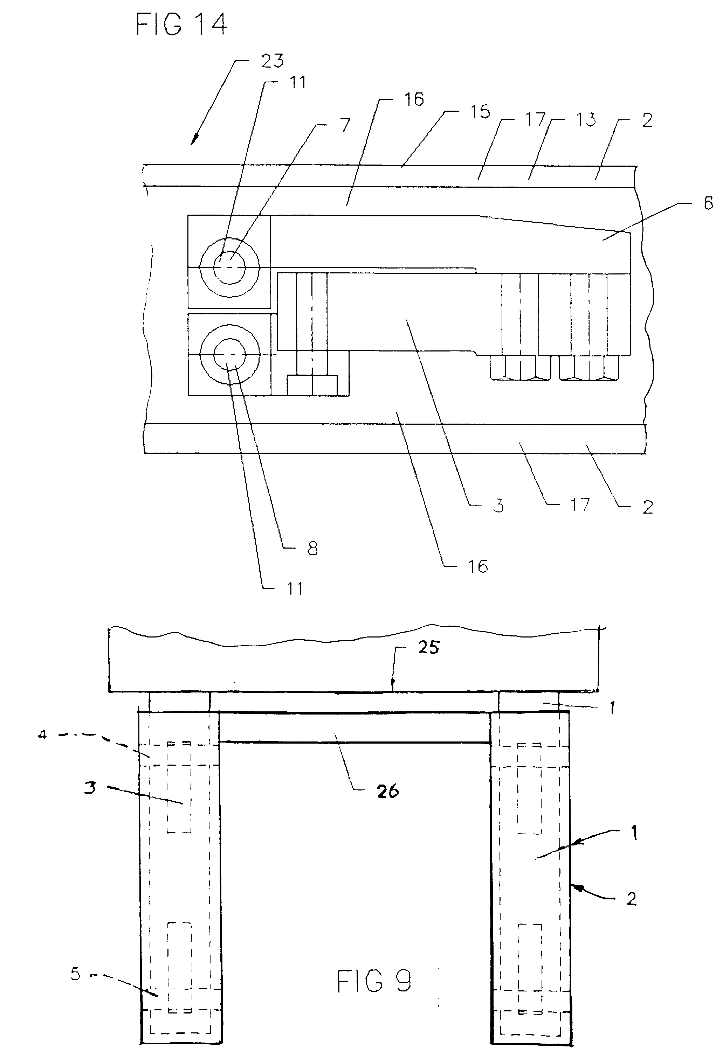

Fig. 9 shows an embodiment largely corresponding to that of Fig. 8. Here, the bearing frame 1 is constituted by two tubes connected to a part of a vehicle 25 and extending in the two tubes which in turn constitute the weighing frame 2. The two tubes are now connected by a beam 26 so that a U-shaped weighing frame 2 is obtained. For example, such a weighing device can be part of a fork-lift truck, or can be provided with engaging members - not shown - for taking up a load such as a container.

Basically, a weighing device 23 can also be constructed in such a way, that the weighing frame 2 only consists of one single tube as it is shown in Figs. 8 and 9 and which tube thus is supported by the bearing frame e.g. also comprising one single tube, through two suspension elements 6. Such an embodiment can be applied when a load to be weighed is suspended from the weighing frame 2. With such a load, the weighing frame will only perform a limited angular rotation in relation to the bearing frame.

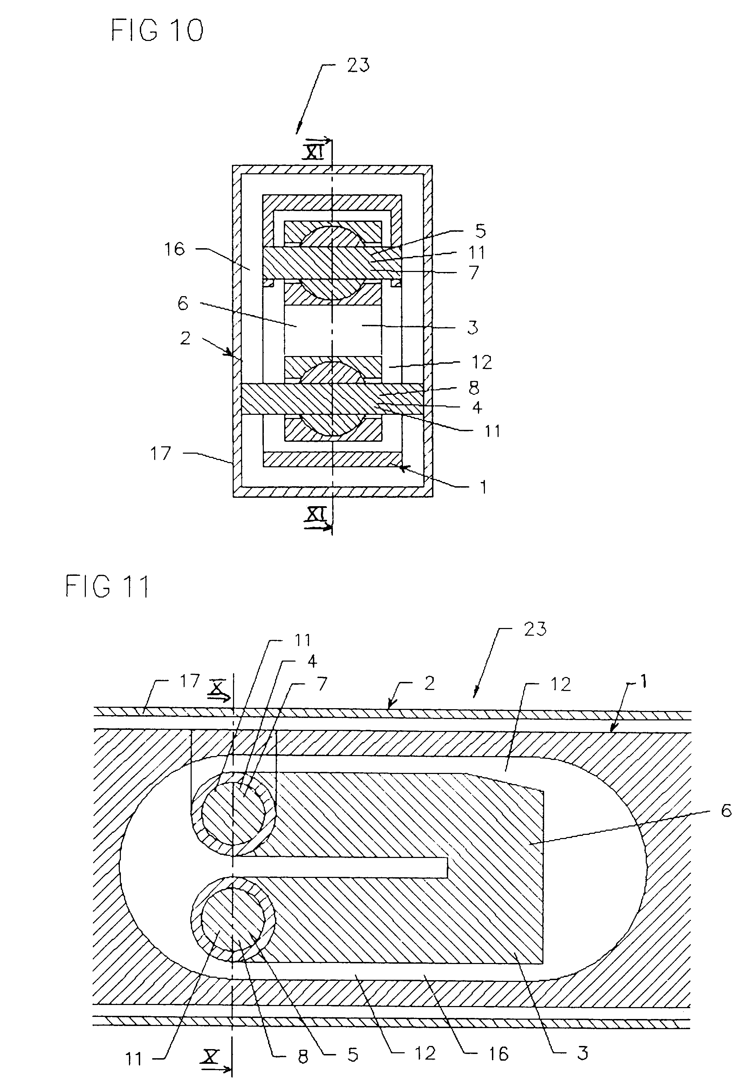

Figs. 10 and 11 show in more detail a possible embodiment of the suspension of a part of a weighing frame 2 to a part of a bearing frame 1 being within the bearing frame. Such a suspension can be applied with the embodiments according to the Figs. 8 and 9, for example.

The console 4 and the fastening member 5 are designed as shafts provided with convex members that concave members bear upon, so that cardan connections 11 are obtained at the ends 7 and 8 of the suspension element 6. At the same time, the load cell 3 is received in the suspension element 6, as it appears from Fig. 11 in particular.

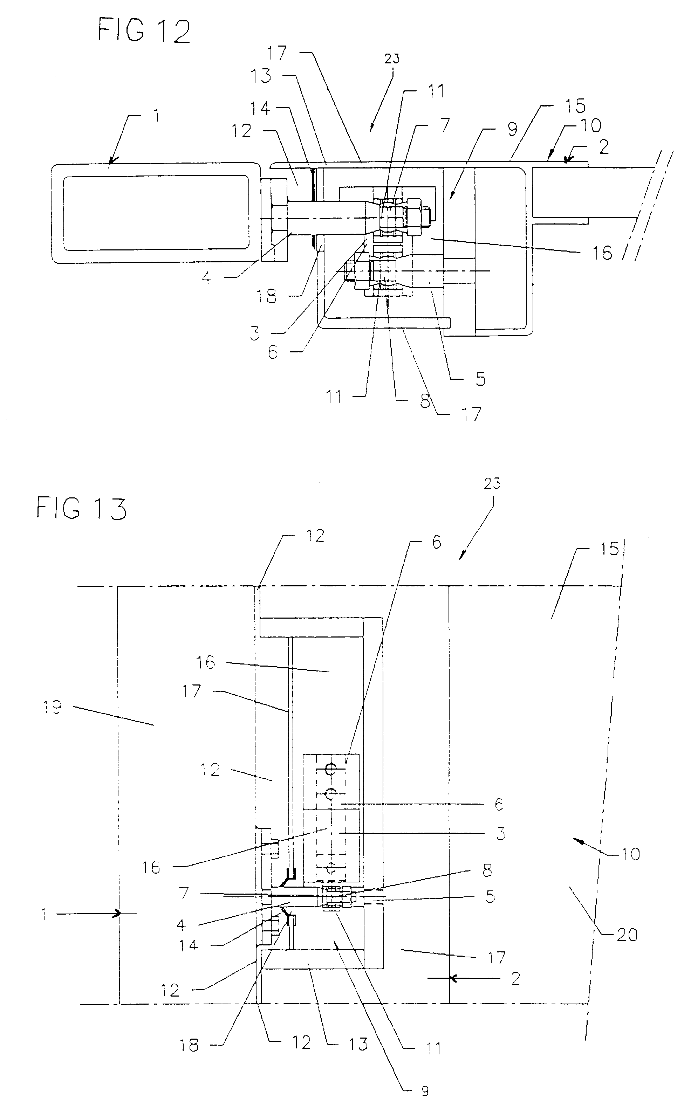

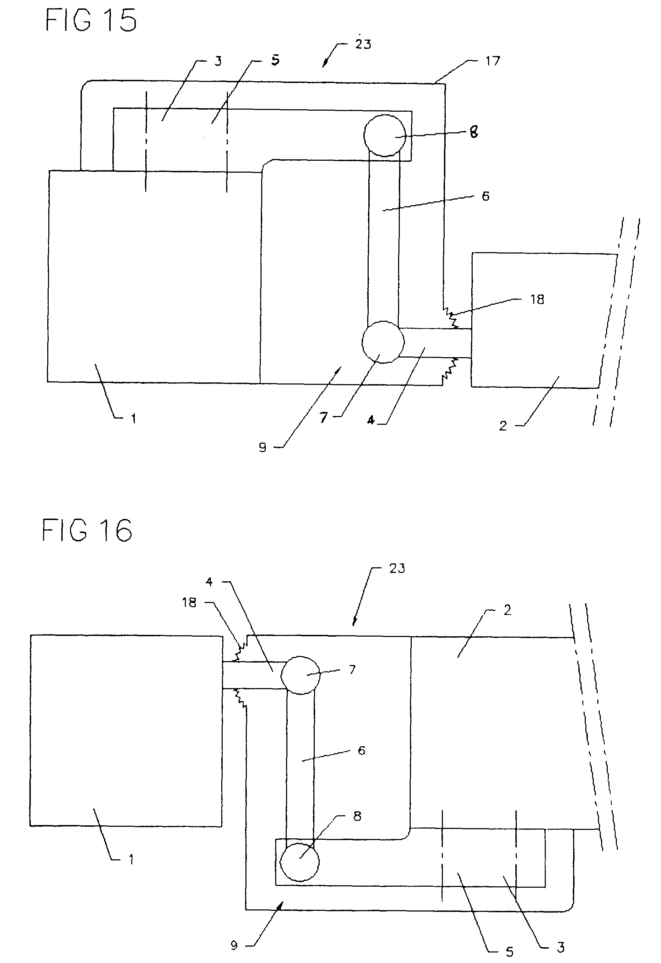

The Figs. 12 and 13 show a special embodiment of a device 23 according to the invention in which the weighing frame 1 is constituted by at least two profiles connected to each other by a plate-shaped part for obtaining the loading surface 15. The bearing frame 1 again consists of two tubes and the consoles 4 are connected thereto. Each console 4 extends through an opening 18 in a wall of the housing 17 constituted by one of the profiles a fastening member 5 is connected to. The console 4 and the fastening member 5 have a cilindrical cross-section and at the position where they are connected to the suspension elements they are provided with a convex part cooperating with a corresponding concave part of a suspension element 6. Again, the opening 18 is sealed by means of a sealing 14. The load cell 3 is located in the suspension element 6 as it is shown in Fig. 14.

Fig. 15 shows diagrammatically how a load cell 3 can be incorporated in a fastening member 5. The fastening member 5 is connected to the bearing frame 1 and is connected to the end 8 of a suspension element 6 near the other end, the other end 7 of which being connected to a console 4, which in turn is connected to the weighing frame 2 and extends through an opening 18 in the housing 17.

The embodiment according to Fig. 16 corresponds largely to that of Fig. 15. Here, however, the fastening member 5, in which the load cell 3 is incorporated, is connected to the weighing frame 2, and the console extending through the wall of the housing 17 is connected to the bearing frame 1.

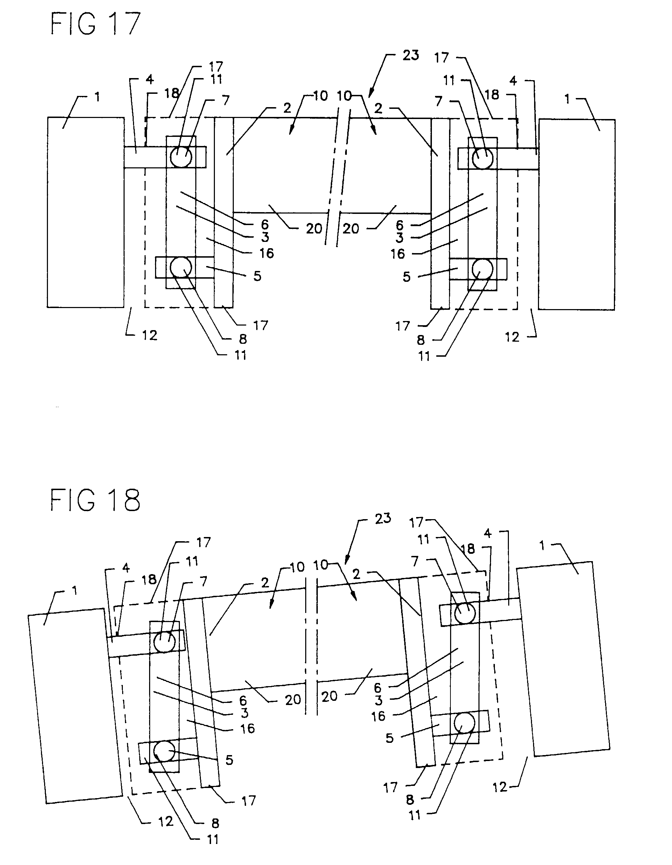

The Figs. 17 and 18 show an embodiment of a weighing device 23 corresponding largely to the embodiment according to fig. 1. Here, however, the housing 17 is partly provided with a non-closed wall so that the parts of the suspension 9 are substantially only protected against mechanical damage. Fig. 18 illustrates the position of the device when it is used on a vehicle so that the upper surface of the device can not be brought into a horizontal plane. However, this causes no difficulties, since nevertheless accurate weighing can be effected.

It will be obvious, that only some possible embodiments of a device according to the invention are illustrated in the drawing and described above, and that many modifications can be made without leaving the inventive idea.

## Claims

1. A weighing device for mounting on a vehicle or a part connected thereto comprising a bearing frame (1) connectable to the vehicle or to said part thereof, and a weighing frame (2) for carrying a load and suspended to the bearing frame through suspension elements (6) which are both flexible and movably connected to respective connection members (4,5) extending laterally and being connected to said weighing and bearing frames respectively (1, 2) to allow the weighing frame (2) to move freely in relation to the bearing frame (1) within certain limits, a load cell (3) being mounted in a suspension element (6), and a summation device summing the forces exerted on the individual load cells (3), said suspension elements (6) each being arranged near the bearing and weighing frame edges, each of said suspension elements (6) is positioned enclosing said suspension element, within a housing (17) **characterized in that** said housing is fixedly connected to one of said frames (1,2), said suspension element (6) being flexibly connected to a connection member (4,5) which is fixedly connected to said housing (17) such that said supension element is having substantially its complete freedom of movement with in said housing, the connection member (5,4) connecting said suspension element to the other frame (2,1) extending through an opening (18) in said housing.

2. Weighing device according to claim 1, **characterized in that** said housing (17) is situated completely below the upper surface of the weighing frame (2).

3. Weighing device according to claim 1 or 2, **characterized in that** the edges of the upper surface of the weighing frame (2) are situated at a higher level than the upper surface of the bearing frame (1), said upper surface of the weighing frame extending laterally above part of said bearing frame (1).

4. Weighing device according to claim 3, **characterized in that** the outer edge of the weighing frame (2) is provided with a flexible sheet (24), such as from a plastic, or with a brush, establishing a sealing of the opening (12) between the bearing frame (1) and the weighing frame (2).

5. Weighing device according to one of the preceding claims, **characterized in that** said connecting member (4,5) extending through said opening (18) in said housing (17) has a cylindrical shape at least there where it passes through said opening.

6. Weighing device according to one of the preceding claims, **characterized in that** the opening (18) in the housing (17) through which said connecting member (4,5) extends, is provided with a flexible sealing (14) extending around the member, of a material such as plastic, rubber.

7. Weighing device according to one of the preceding claims, **characterized in that** the bearing frame (1) encloses the weighing frame (2) at least partially and that the bearing frame (1) comprises a secondary opening (22) for a connecting piece (21) being mounted to the enclosed part of the weighing frame (2) on the one hand and to the part of the weighing frame that serves for carrying the load on the other hand.

8. Weighing device according to claim 7, **characterized in that** the bearing frame (1) comprises two spaced apart, substantially rectangular tubes, in which there are parts of the weighing frame (2) that are likewise substantially rectangular and which are provided with a pin-shaped fastening member (5) being engaged by the lower end of the suspension element (6), the upper end of which engages a pin-shaped console (4) connected to the bearing frame (1) and extending through the relevant part of the weighing frame (2) with clearance, this part of the weighing frame being provided with a connecting piece (21) extending through the wall of the tube of the weighing frame (2) with clearance and being connected to the part of the weighing frame (2) which serves for carrying the load to be weighed.

9. Weighing device according to one of the claims 1 - 6, **characterized in that** the bearing frame (1) is a profile which at the same time is the housing for the suspension elements (6) located therein and with at least a part of the weighing frame (2) extending around said profile, said part being substantially in the shape of a tube within which the connecting members (4) are mounted, extending with clearance through openings (18) provided in the bearing frame (1).

## Patentansprüche

1. Wiegegerät zur Montage auf einem Fahrzeug oder einem damit verbundenen Teil umfassend einen Tragrahmen (1), der mit dem Fahrzeug oder dessene Teil verbindbar ist, und einem Wiegerahmen (2) zum Tragen einer Last, an dem Tragrahmen durch Hängeelemente (6) aufgehängt, die sowohl biegsam als auch bewegbar mit entsprechenden Verbindungsteilen (4, 5) verbunden sind, die sich seitlich erstrecken und mit dem Wiege- bzw. Tragrahmen (1, 2) verbunden sind, um dem Wiegerahmen (2) zu ermöglichen, sich frei in Bezug auf den Tragrahmen (1) innerhalb gewisser Grenzen zu bewegen, eine Lastzelle (3), die in einem Hängeelement (6) montiert ist, und eine Summierungsvorrichtung, die die auf die individuellen Lastzellen (3) ausgeübten Kräfte summiert, wobei jedes Hängeelement (6) nahe den Trag- und Wiegerahmenkanten angeordnet ist, wobei jedes der Hängeelemente (6) in einem Gehäuse (17) angeordnet ist, daß das Hängeelement umgibt,
**dadurch gekennzeichnet,**
daß das Gehäuse fest mit einem der Rahmen (1, 2) verbunden ist, wobei das Hängeelement (6) flexibel mit einem Verbindungsteil (4, 5) verbunden ist, welches fest mit dem Gehäuse (17) verbunden ist, so daß das Hängeelement im wesentlichen seine vollständige Bewegungsfreiheit in dem Gehäuse hat, wobei das Verbindungsteil (5, 4), welche das Hängeelemement mit dem anderen Rahmen (2, 1) verbindet, sich durch eine Öffnung (18) in dem Gehäuse erstreckt.

2. Wiegegerät nach Anspruch 1, dadurch gekennzeichnet, daß das Gehäuse (17) sich vollständig unter der oberen Fläche des Wiegerahmens (2) befindet.

3. Wiegerahmen nach Anspruch 1 oder 2, dadurch gekennzeichnet, daß die Kanten der oberen Fläche des Wiegerahmens (2) sich auf einer höheren Ebene als die obere Fläche des Wiegerahmen (1) befinden, wobei sich die obere Fläche des Wiegerahmens seitlich über einen Teil des Tragrahmens (1) erstreckt.

4. Wiegegerät nach Anspruch 3, dadurch gekennzeichnet, daß die äußere Kante des Wiegerahmens (2) mit einer flexiblen dünnen Platte (24) versehen ist, etwa aus Kunststoff, oder mit einer Bürste, die eine Dichtung der Öffnung (12) zwischen dem Tragrahmen (1) und dem Wiegerahmen (2) bildet.

5. Wiegegerät nach einem der vorhergehenden Ansprüche, dadurch gekennzeichnet, daß das Verbindungsteil (4, 5), das sich durch die Öffnung (18) in dem Gehäuse (17) erstreckt, eine zylindrische Form zumindest dort aufweist, wo es durch die Öffnung hindurchgeht.

6. Wiegegerät nach einem der vorhergehenden Ansprüche, dadurch gekennzeichnet, daß die Öffnung (18) in dem Gehäuse (17), durch welche sich das Verbindungsteil (4, 5) erstreckt, mit einer flexiblen Dichtung (14) versehen ist, die sich um das Teil erstreckt, aus einem Material wie Kunststoff, Gummi.

7. Wiegegerät nach einem der vorhergehenden Ansprüche, dadurch gekennzeichnet, daß der Tragrahmen (1) den Wiegerahmen (2) zumindest teilweise umschließt, und daß der Tragrahmen (1) eine sekundäre Öffnung (22) für ein Verbindungsstück (21) aufweist, das einerseits an dem eingeschlossenen Teil des Wiegerahmens (2) und andererseits an dem Teil des Wiegerahmens befestigt ist, das zum Tragen der Last dient.

8. Wiegegerät nach Anspruch 7, dadurch gekennzeichnet, daß der Tragrahmen (1) zwei beabstandete, im wesentlichen rechtwinklige Röhren aufweist, in welchen sich Teile des Wiegerahmens (2) befinden, die ebenfalls im wesentlichen rechtwinklig sind und mit einem bolzenförmigen Befestigungsteil (5) versehen sind, das von dem unteren Ende des Hängeelementes (6) in Eingriff genommen ist, wobei dessen oberes Ende mit einer bolzenförmigen Konsole (4) im Eingriff ist, die an dem Tragrahmen (1) befestigt ist und sich durch den relevanten Teil des Wiegerahmens (2) mit Spiel erstreckt, wobei dieser Teil des-Wiegerahmens mit einem Verbindungsstück (21) versehen ist, das sich durch die Wand der Röhre des Wiegerahmens (2) mit Spiel erstreckt und mit dem Teil des Wiegerahmens (2) verbunden ist, der zum Tragen der zu wiegenden Last dient.

9. Wiegegerät nach einem der Ansprüche 1 bis 6, dadurch gekennzeichnet, daß der Tragrahmen (1) ein Profil ist, welches gleichzeitig das Gehäuse für die darin befindlichen Hängeelemente (6) ist, wobei zumindest ein Teil des Wiegerahmens (2) sich um das Profil erstreckt, wobei das Teil im wesentlichen die Form einer Röhre aufweist, worin die Verbindungsteile (4) montiert sind, die sich mit Spiel durch Öffnungen (18) erstrecken, die in dem Tragrahmen (1) vorhanden sind.

## Revendications

1. Dispositif de pesée destiné à être monté sur un véhicule ou sur une partie raccordée au véhicule, comprenant un bâti porteur (1) pouvant être raccordé au véhicule ou à ladite partie, et un bâti de pesée (2) pour porter une charge et suspendu au bâti porteur par des éléments de suspension (6) qui sont à la fois flexibles et raccordés de manière mobile à des éléments de raccordement respectifs (4, 5) s'étendant latéralement et raccordés auxdits bâtis de pesée et porteur respectivement (2, 1) pour permettre au bâti de pesée (2) de se déplacer librement par rapport au bâti porteur (1) à l'intérieur de certaines limites, une boîte dynamométrique (3) étant montée dans un élément de suspension (6), et un dispositif de sommation additionnant les forces exercées sur les boîtes dynamométriques individuelles (3), chacun desdits éléments de suspension (6) étant disposé au voisinage des bords des bâtis porteur et de pesée, chacun desdits éléments de suspension (6) étant positionné à l'intérieur d'un carter (17) enfermant ledit élément de suspension, caractérisé en ce que ledit carter est solidarisé, fixe, de l'un des bâtis (1, 2), ledit élément de suspension (6) étant raccordé de manière flexible à un élément de raccordement (4, 5) qui est solidarisé, fixe, dudit carter (17) de telle sorte que ledit élément de suspension a pratiquement sa complète liberté de mouvement à l'intérieur dudit carter, l'élément de raccordement (5, 4) raccordant ledit élément de suspension à l'autre bâti (2, 1) s'étendant à travers une ouverture (18) dans ledit carter.

2. Dispositif de pesée selon la revendication 1, caractérisé en ce que ledit carter (17) est situé complètement en dessous de la surface supérieure du bâti de pesée (2).

3. Dispositif de pesée selon la revendication 1 ou la revendication 2, caractérisé en ce que les bords de la surface supérieur du bâti de pesée (2) sont situés plus haut que la surface supérieur du bâti porteur (1), ladite surface supérieure du bâti de pesée s'étendant latéralement au dessus d'une partie dudit bâti porteur 1.

4. Dispositif de pesée selon la revendication 3, caractérisé en ce que le bord extérieur du bâti de pesée (2) est équipé d'une feuille flexible (24), par exemple en matière plastique, ou d'un balai, constituant l'étanchéité de l'ouverture (12) entre le bâti porteur (1) et le bâti de pesée.

5. Dispositif de pesée selon l'une des revendications précédentes, caractérisé en ce que ledit élément de raccordement (4, 5) s'étendant à travers ladite ouverture (18) dans ledit carter (17) a une forme cylindrique tout au moins là ou il passe à travers l'ouverture.

6. Dispositif de pesée selon l'une des revendications précédentes, caractérisé en ce que l'ouverture (18) dans le carter (17) à travers laquelle s'étend ledit élément de raccordement (4, 5), est équipée d'une garniture d'étanchéité flexible (14) entourant ledit élément, en un matériau tel que matière plastique ou caoutchouc.

7. Dispositif de pesée selon l'une des revendications précédentes, caractérisé en ce que le bâti porteur (1) enferme au moins partiellement le bâti de pesée (2) et que le bâti porteur (1) comprend une deuxième ouverture (22) pour une pièce de raccordement (21) montée sur la partie enfermée du bâti de pesée (2) d'une part et sur la partie du bâti de pesée qui sert à porter la charge d'autre part.

8. Dispositif de pesée selon la revendication 7, caractérisé en ce que le bâti porteur (1) comprend deux tubes espacés, pratiquement rectangulaires, dans lesquels il y a des parties du bâti de pesée (2) qui sont de même pratiquement rectangulaires et qui sont équipées d'un élément de fixation (5) en forme de broche, lequel coopère avec l'extrémité inférieure de l'élément de suspension (6), dont l'extrémité supérieure coopère avec une console (4) en forme de broche raccordée au bâti porteur (1) et s'étendant avec jeu à travers la partie correspondante d'un bâti de pesée, cette partie du bâti de pesée étant équipée d'un pièce de raccordement (21) s'étendant avec jeu à travers la paroi du tube du bâti de pesée (2) et étant raccordée à la partie du bâti de pesée (2) qui sert à porter la charge à peser.

9. Dispositif de pesée selon l'une des revendications 1 à 6, caractérisé en ce que le bâti porteur (1) est un profilé qui est en même temps le carter des éléments de suspension (6) situés à l'intérieur, au moins une partie du bâti de pesée (2) s'étendant autour dudit profilé, ladite partie ayant pratiquement la forme d'un tube à l'intérieur duquel sont montés les éléments de raccordement (4), s'étendant avec jeu à travers des ouvertures (18) ménagées dans le bâti porteur (1).
